# EUROPEAN PATENT SPECIFICATION

(11) **EP 1 307 407 B1**
(45) Date of publication and mention of the grant of the patent: **12.10.2005**
(21) Application number: 01925855.7
(22) Date of filing: 29.03.2001
(51) Int. Cl.: C02F 1/66, C02F 1/52, C02F 1/28

(54) **COMPOSITION FOR THE NEUTRALISATION OF INORGANIC AND ORGANIC STRONG ACIDS**
ZUSAMMENSETZUNG ZUR NEUTRALISATION VON ORGANISCHEN UND ANORGANISCHEN STARKEN SÄUREN
COMPOSITION DE NEUTRALISATION D'ACIDES FORTS INORGANIQUES ET ORGANIQUES

(30) Priority: 31.07.2000 IT RM000427
(43) Date of publication of application: 07.05.2003
(73) Proprietor: Glorio, Giovanni, Montecarlo (MC)
(72) Inventor: Glorio, Giovanni, Montecarlo (MC)
(74) Representative: Iannone, Carlo Luigi
(86) International application number: PCT/IT2001/000162
(87) International publication number: WO 2002/010075

(56) References cited:
- WO-A-99/36365
- CN-A- 1 078 221
- DE-A- 4 200 479
- US-A- 4 765 908
- PATENT ABSTRACTS OF JAPAN vol. 012, no. 143 (C-492), 30 April 1988 (1988-04-30) & JP 62 258794 A (HITACHI LTD;OTHERS: 01), 11 November 1987 (1987-11-11)
- PATENT ABSTRACTS OF JAPAN vol. 1995, no. 07, 31 August 1995 (1995-08-31) & JP 07 088483 A (ISHIZUKA GLASS CO LTD), 4 April 1995 (1995-04-04)

## Description

The present invention relates to a composition for the neutralisation of inorganic and organic strong acids.

Particularly, the invention concerns a composition for the neutralisation of acids, such as, for example, sulphuric acid, contained within batteries.

Accumulators are employed in many industrial plants, such as uninterruptible power supplies or as supplementary power supply when peak loads occur. Examples of places where the batteries are employed are telephone exchanges, banks, hospitals, state authorities, mechanical workshops, car electrical repairs, naval dockyards.

Maintenance or replacement of the above devices often involves loss of the acids therein contained, with the consequent hazard for authorised persons. Furthermore, disposal of large amounts of acid provided into the batteries is a serious reason of pollution of ground and water. In fact, often, acid substances are dispersed in the ground and are poured into the water of rivers and seas without previously carrying out efficient neutralisation treatments. It is known that the value of the hydrogen ion concentration into the water is essential for the development of the aquatic flora and fauna. Most suitable pH values for the development of the aquatic life are included within the range between 7 and 8, and in any case not lower than 6 and not higher than 9. Industrial acid disposal into the waters thus determines an unbalance of natural pH in such a way to cause remarkable ecological damages.

In view of the above, it is well evident the needing of having available a product able to solve the above problems.

The Applicant of the present invention found a composition comprising compounds such as carbonates and hydroxides, neutralising inorganic and organic strong acids, as well as absorbing and adsorbing powders.

The composition can be advantageously employed to decontaminate polluted surfaces and waters from inorganic and organic strong acids. Particularly, the above composition can be employed in all rooms where batteries groups exist or where other radical acids are employed.

The composition according to the present invention is insoluble in water, neutral when dry, not polluting since it is related to the mineral comprising the ground, not toxic for men, animals and vegetables, is not caustic when wet or irritating the skin.

The composition has a high absorption and fixing feature of liquids preventing the expansion of the same, rapidly conjugating with acid radicals, mainly with those of the sulphuric acid, extinguishing its acidity, toxicity, corrosive action and cauterising power on the living tissues.

The composition transforms sulphuric acid into non-toxic, water insoluble products, having a pH included within the range between about 6 and 7.

Mortar obtained from the reaction of the composition with sulphuric acid can be easily collected and poured, through the draining water, into the rivers, where, due to its insolubility, will tend to precipitate on the bottom without any damaging to the flora and fauna; it can be also dispersed on the agricultural ground, thus contributing to enrich the same with mineral elements.

To extinguish acids by the composition according to the invention, it is sufficient to distribute the same on the surfaces polluted by the same acids, letting the reaction proceed for about 5 - 8 minutes, until when, once ceased the effervescence, the mortar created is hardened into a sandy - farinose mass, that can be easily removed. Finally, surface treated can be washed by water.

As already mentioned, neutralisation of the acid occurs with effervescence that, thanks to the presence of the absorbing and/or adsorbing powders, determines only little sprays, not rising more than 3 cm above the reaction level. Temperature developed during the reaction does not exceed values included between 40 and 45°C.

Effervescence terminates when all the acid is extinguished.

Therefore, the use of the composition for the neutralisation of the acids does not determine hazards for the operators.

Furthermore, neutral product deriving from the reaction can be left in situ for an indeterminate time, without the occurrence of secondary corrosive actions. Said product can also be discharged also by sewage mixed with water for the outflow in a minimum proportion of 4:1 in volume with respect to the mass to be discharged.

It is therefore specific object of the present invention a composition for the neutralisation of strong organic and inorganic acids comprising sodium carbonate with a concentration included between 5 and 15% in weight, calcium carbonate with a concentration included between 50 and 70% in weight, calcium hydroxide with a concentration included between 2 and 10% in weight, bentonite with a concentration included between 10 and 20% in weight.

The composition can further comprise kaolin with a concentration included between 5 and 15% in weight.

Preferably, the composition comprises 57,25% in weight of calcium carbonate, 15,57% in weight of bentonite, 9,70% in weight of sodium carbonate, 6,45% in weight of calcium hydroxide.

More preferably, the composition comprises 63,23% in weight of calcium carbonate, 14,59% in weight of bentonite, 9,73% in weight of kaolin, 7,59% in weight of sodium carbonate, 4,86% in weight of calcium hydroxide.

The composition according to the invention is particularly suitable for the neutralisation of sulphuric acid, that is present in the batteries, but it can be advantageously used for the neutralisation of each strong organic or inorganic acid.

Therefore, it is further object of the present invention the use of the above composition for the decontamination of surfaces polluted by strong organic and/or inorganic acids, such as sulphuric acid, for example, sulphuric acid contained within batteries.

It is further object of the present invention a method for the decontamination of surfaces polluted by strong inorganic and/or organic acids, comprising the following steps:
a) distributing the composition according to the present invention on the surface polluted by the acids;
b) letting the neutralisation reaction proceed until the effervescence is finished;
c) removing the neutralisation reaction products.

In the following, it is provided a table showing the amount of composition according to the present invention that can be employed for the neutralisation of the acids of batteries groups in function of the kind of battery used. Particularly, the table refers to the composition comprised of 57.25% in weight of calcium carbonate, 15.57% in weight of bentonite, 9.70% in weight of sodium carbonate, 6.45% in weight of calcium hydroxide. This is a neutral composition, having the appearance of a grey coloured, pulverous mass, with a styptic taste, a density (specific weight) of about 0.7 - 0.8 Kg/dm³, negative electrical conductivity and water solubility lower than 0.1%.

| For each battery | Kg of Composition |
|---|---|
| Up to 200 Ah | 7 |
| Up to 450 Ah | 7 |
| Up to 700 Ah | 7 |
| Up to 1200 Ah | 14 |
| Up to 1600 Ah | 21 |
| Up to 2000 Ah | 28 |
| Up to 2500 Ah | 28 |
| Up to 3000 Ah | 42 |
| Up to 3500 Ah | 42 |
| Up to 3900 Ah | 49 |
| Up to 4500 Ah | 56 |
| Up to 5250 Ah | 63 |
| Up to 6500 Ah | 77 |
| Up to 7000 Ah | 91 |
| Up to 7500 Ah | 98 |
| Up to 8000 Ah | 98 |
| Up to 9000 Ah | 105 |
| Up to 9500 Ah | 112 |
| Up to 10000 Ah | 112 |

The preparation of the composition according to the invention is carried out mixing the elements in the established proportion. Components are sent by sacks breaking worm screws, one for each component, to a first metering device that, by a loading cell, introduces them, in sequence, and in the appropriated amounts, within the counter-rotating blade planetary mixer. Simultaneous rotation of the mixing arms, on which the blades are fixed, allows to obtain the suitable mixing in very short time. Afterwards, the composition is sent by gravity to the second metering device placed along the packaging line, providing the filling of the containers by a suction system, in order to eliminate the spreading of the product in the surrounding air.

At the end of each mixing cycle, it is in any case taken a sample to carry out a laboratory analyses confirming the full correspondence with the use features and allowing the issuing of the relevant conformity certificate.

Containers are closed by a sealing cover guaranteeing the perfect conservation and allowing, if necessary, the taking of the amount necessary to complete the neutralisation reaction and thus the following sealed closure.

Packaging line is substantially comprised of:
- an automatic distributor of the containers;
- a belt conveyor for its advancement;
once carried out the filling under the metering device, the line further comprises:
- a scale, able to discharge packaging not respecting the preestablished weight;
- a packaging machine to automatically apply the cover;
- a pallettiser, able to realise the loading unit to send to the finished product store, after having been suitably finished by a plastic film.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Composition for the neutralisation of strong organic and inorganic acids comprising sodium carbonate with a concentration included between 5 and 15% in weight, calcium carbonate with a concentration included between 50 and 70% in weight, calcium hydroxide with a concentration included between 2 and 10% in weight, bentonite with a concentration included between 10 and 20% in weight.

2. Composition according to claim 1 further comprising kaolin with a concentration included between 5 and 15% in weight

3. Composition according to one of the preceding claims, comprising 57.25% in weight of calcium carbonate, 15,57% in weight of bentonite, 9,70% in weight of sodium carbonate, 6,45% in weight of calcium hydroxide.

4. Composition according to one of the preceding claims, comprising 63.23% in weight of calcium carbonate, 14,59% in weight of bentonite, 9,73% in weight of kaolin, 7,59% in weight of sodium carbonate, 4,86% in weight of calcium hydroxide.

5. Use of the composition according to one of the preceding claims for the decontamination of the surfaces polluted by strong inorganic and organic acids.

6. Use according to claim 5, wherein strong inorganic acid is sulphuric acid.

7. Use according to claim 6, wherein strong inorganic acid is sulphuric acid contained within batteries.

8. Method for the decontamination of surfaces polluted by strong inorganic and/or organic acids, comprising the following steps:
a) distributing the composition according to one of the preceding claims 1-4 on the surface polluted by the acids;
b) letting the neutralisation reaction proceed until the effervescence is finished;
c) removing the neutralisation reaction products.

## Patentansprüche

1. Zusammensetzung zur Neutralisierung starker organ i-scher und anorganischer Säuren, umfassend Natriumcarbonat mit einer Konzentration zwischen 5 und 15 Gew.-%, Calciumcarbonat mit einer Konzentration zwischen 50 und 70 Gew. -%, Calciumhydroxid mit einer Konzentration zwischen 2 und 10 Gew. -%, Bentonit mit einer Konzentration zwischen 10 und 20 Gew.-%.

2. Zusammensetzung nach Anspruch 1, ferner umfassend Kaolin mit einer Konzentration zwischen 5 und 15 Gew.-%.

3. Zusammensetzung nach ir gendeinem der vorhergehenden Ansprüche, umfassend 57,25 Gew. -% Calciumcarbonat, 15,57 Gew.-% Bentonit, 9,70 Gew. -% Natriumcarbonat, 6,45 Gew. -% Calciumhydroxid.

4. Zusammensetzung nach irgendeinem der vorhergehenden Ansprüche, umfassend 63,23 Gew. -% Calc iumcarbonat, 14,59 Gew.-% Bentonit, 9,73 Gew.-% Kaolin, 7,59 Gew.-% Natriumcarbonat, 4,86 Gew.-% Calciumhydroxid.

5. Verwendung der Zusammensetzung nach irgendeinem der vorhergehenden Ansprüche für die Dekontaminierung von Obe r-flächen, die durch starke anorganische und organische Säuren verunreinigt sind.

6. Verwendung nach Anspruch 5, wobei die starke anorganische Säure Schwefelsäure ist.

7. Verwendung nach Anspruch 6, wobei die starke anorganische Säure in Batterien enthaltene Schwefelsäure ist.

8. Verfahren zur Dekontaminierung von Oberflächen, die durch starke anorganische und/oder organische Säuren veru n-reinigt sind, umfassend die folgenden Schritte:
a) Verteilen der Zusammensetzung nach irgendeinem der vorhergehenden Ansprüche 1-4 auf der durch die Säuren verunreinigten Oberfläche;
b) Ablaufen lassen der Neutralisierungsreaktion, bis das Aufschäumen beendet ist;
c) Entfernen der Neutralisierungsreaktionsprodukte.

## Revendications

1. Composition pour la neutralisation d'acides forts organiques et inorganiques comprenant du carbonate de sodium en une concentration comprise entre 5 et 15% en poids, du carbonate de calcium en une concentration comprise entre 50 et 70% en poids, de l'hydroxyde de calcium en une concentration comprise entre 2 et 10% en poids, de la bentonite en une concentration comprise entre 10 et 20% en poids.

2. Composition selon la revendication 1, comprenant en outre du kaolin en une concentration comprise entre 5 et 15% en poids.

3. Composition selon l'une des revendications précédentes, comprenant 57,25% en poids de carbonate de calcium, 15,57% en poids de bentonite, 9,70% en poids de carbonate de sodium, 6,45% en poids d'hydroxyde de calcium.

4. Composition selon l'une des revendications précédentes, comprenant 63,23% en poids de carbonate de calcium, 14,59% en poids de bentonite, 9,73% en poids de kaolin, 7,59% en poids de carbonate de sodium, 4,86% en poids d'hydroxyde de calcium.

5. Utilisation d'une composition selon l'une des revendications précédentes pour la décontamination des surfaces polluées par des acides forts inorganiques et organiques.

6. Utilisation selon la revendication 5, dans laquelle l'acide fort inorganique est de l'acide sulfurique.

7. Utilisation selon la revendication 6, dans laquelle l'acide fort inorganique est de l'acide sulfurique contenu dans des accumulateurs.

8. Procédé de décontamination de surfaces polluées par des acides forts inorganique et/ou organiques, comprenant les étapes suivantes :
a) distribution d'une composition selon l'une des revendications 1 à 4 précédentes sur la surface polluée par les acides ;
b) réalisation de la réaction de neutralisation jusqu'à achèvement de l'effervescence ;
c) élimination des produits de réaction de neutralisation.
